# FASCICULE DE BREVET EUROPEEN

(11) **EP 2 296 788 B1**
(45) Date de publication et mention de la délivrance du brevet: **29.02.2012**
(21) Numéro de dépôt: 08874267.1
(22) Date de dépôt: 16.05.2008
(51) Int. Cl.: B01D 53/64, B01J 8/16, B01J 8/18, B01J 8/40, B01J 20/32, B01J 23/74, B01J 23/85, B01J 35/08, B01J 37/20, C10G 45/08, B01J 20/04

(54) **PROCEDE DE SULFURATION OU PRESULFURATION DE PARTICULES SOLIDES D'UN CATALYSEUR OU D'UN ADSORBANT**
VERFAHREN ZUR SULFIDIERUNG ODER VORSULFIDIERUNG VON FESTEN TEILCHEN EINES KATALYSATORS ODER EINES ADSORPTIONSMITTELS
METHOD FOR THE SULPHIDATION OR PRE-SULPHIDATION OF SOLID PARTICLES OF A CATALYST OR AN ADSORBENT

(43) Date de publication de la demande: 23.03.2011
(73) Titulaire: EURECAT S.A., 07800 La Voulte-sur-Rhône (FR)
(72) Inventeur: DUFRESNE, Pierre, F-26000 Valence (FR); LABRUYERE, Franck, 07800 Saint Georges Les Bains (FR); MEENS, Maxime, F-26250 Livron Sur Drôme (FR); ROMANO, Loredana, I-90127 Palermo (FR)
(74) Mandataire: Andrieux, Benoît
(86) Numéro de dépôt international: PCT/FR2008/000695
(87) Numéro de publication internationale: WO 2009/138577

(56) Documents cités:
- EP-A- 0 612 561
- EP-A- 0 707 890
- EP-A- 0 785 022
- WO-A-01/76741
- FR-A- 2 634 187
- FR-A- 2 780 316
- FR-A- 2 915 908

## Description

### Objet de l'invention

La présente invention concerne un procédé de sulfuration ou présulfuration hors site de particules d'un catalyseur ou d'un adsorbant dans un réacteur de type élévateur ou descendeur vibré, chauffé ou non, en présence de sulfure d'hydrogène pur ou dilué dans de-, hydrogène ou de l'azote.

L'invention concerne ainsi un procédé d'incorporation de soufre dans la porosité des particules solides d'un catalyseur de conversion d'hydrocarbures ou d'un adsorbant, le dit procédé étant effectué hors-site et en présence de sulfure d'hydrogène pur ou dilué dans de l',hydrogène ou de l'azote., procédé dans lequel on fait monter ou descendre lesdites particules dans une zone d'incorporation du soufre qui comprend au moins une spire hélicoïdale vibrante,lesdites particules étant soumises à un profil de température.

Avantageusement, la spire est de forme sensiblement tubulaire, le tube étant sensiblement vertical, et comportant au moins deux pas, lesdites particules étant soumises à un profil de température sur la majeure partie de leur trajet dans ladite spire et lesdites particules étant mises en contact avec au moins un fluide sur au moins une partie de leur trajet

De façon générale, les particules sont soumises à un profil de températures croissantes ou décroissantes dans les sens du mouvement des particules.

Avantageusement, en fin de trajet, les particules sont refroidies par un fluide caloporteur. Dans le procédé selon l'invention, la température est avantageusement comprise entre 20 et 500°C, de préférence 20 et 250°C.

Une application intéressante du procédé est la sulfuration de catalyseurs ou d'adsorbants contenant au moins l'un ou l'autre des métaux cobalt, molybdène, nickel et tungstène ou la sulfuration de catalyseurs ou d'adsorbants contenant au moins du cuivre, de l'argent ou de l'or.

Un mode de réalisation avantageux est celui où la spire est non chauffée, l'exothermicité de la réaction permettant de chauffer substantiellement les particules.

L'appareil permettant la mise en oeuvre de invention comporte avantageusement une spire métallique de forme sensiblement tubulaire ou une spire métallique de forme aplatie.

### Champ de l'invention

L'invention concerne la sulfuration ou présulfuration d'un catalyseur ou d'un adsorbant avec des conditions opératoires décrites notamment dans le brevet européen de la demanderesse EP-B-785022 et qui donne de précieuses informations sur les principes des sulfurations/présulfurations.

Il est souvent souhaitable de procéder à une sulfuration (généralement appelée "présutfuration") des métaux entrant dans la composition de certains catalyseurs de raffinage et/ou d'hydroconversion d'hydrocarbures, soit lorsque ces catalyseurs sont neufs, soit à l'issue de la régénération de ces catalyseurs avant de les réutiliser. De même, il est également souhaitable, dans certains domaines d'effectuer aussi une sulfuration/présulfuration de certains adsorbants contenant des métaux.

On rappellera ici, ainsi qu'il est expliqué en détail dans EP-B-785022 cité ci-dessus, qu'une présulfuration des catalyseurs neufs ou régénérés est souhaitable pour l'emploi de ces catalyseurs dans les réactions de raffinage, par exemple les réactions d'hydrotraitement ou d'hydrodésulfuration ou d'hydrocraquage de diverses coupes pétrolières dont il convient, avant emploi, d'abaisser la teneur en soufre ou d'améliorer d'autres caractéristiques. On citera encore les réactions de reformage, d'hydrogénation, de déshydrogénation, pour lesquelles aussi, il est souvent avantageux de présulfurer le catalyseur.

De telles réactions (hydrotraitement notamment) sont généralement effectuées en présence d'hydrogène, entre 100 et 400 °C, sous une pression comprise entre par exemple 5 et 200 bars, avec une vitesse spatiale (exprimée en m3 de charge injectée liquide par m3 de catalyseur et par heure) comprise entre 0,1 et 10, ces conditions opératoires n'étant pas limitatives.

A titre d'exemple, un catalyseur utilisé dans les réactions de raffinage peut renfermer un support, par exemple une alumine ou des mélanges d'alumine (brevet USP 4 334 982) ou tout autre support adéquat à base d'au moins un oxyde d'un métal ou de métalloïde, ce ou ces mélanges de support pouvant au moins en partie se présenter sous forme amorphe ou sous forme cristalline (zéolite par exemple), le catalyseur pouvant en outre renfermer 0,1 à 30 % d'au moins un métal actif des groupes IVB, VB, VIB, VIIB, VIIIB, IB, IIB de la classification périodique des éléments, ou autres groupes de la classification périodique des éléments.

Les métaux des catalyseurs utilisés en raffinage, hydroraffinage ou en pétrochimie, qu'ils soient neufs ou régénérés, sont le plus souvent sous forme oxydée. Or, les métaux de ces catalyseurs n'étant souvent actifs ou performants que sous forme sulfurée ou au moins partiellement sulfurée, il est donc nécessaire au raffineur ou au pétrochimiste d'opérer une sulfuration du catalyseur préalablement à sa mise en oeuvre.

Ainsi, avant d'être utilisé, le catalyseur, neuf ou régénéré, est soumis généralement dans l'art antérieur, à une sulfuration ou présulfuration. Cette sulfuration/présulfuration permet d'inclure dans le catalyseur, par exemple, 50 à 110 % environ des quantités stoechiométriques de soufre calculées sur les quantités de sulfures de formule (selon les métaux présents) MoS₂, WS₂, Co₉S₈, et Ni₃S₂.

Cette sulfuration (présulfuration) est effectuée au moyen d'au moins un agent de sulfuration.

On peut utiliser divers agents de sulfuration, par exemple l'hydrogène sulfuré (H₂S), de préférence en présence d'hydrogène, éventuellement en présence d'hydrocarbures gazeux (US-A-4334982), ou tout autre produit susceptible de se décomposer en H₂S, ainsi, en présence d'hydrogène, le sulfure de carbone CS₂, les polysulfures (organiques notamment : les butyl, octyl, nonyl, dodécyl polysulfures), les sulfures ou les disulfures comme le diméthylsulfure (DMS) et le diméthyldisulfure (DMDS), les composés oxygénés du soufre, le dimethylsulfoxyde, le sulfolane, etc...La sulfuration (ou présulfuration) peut être effectuée par paliers de température (brevet européen EP-B-64429).

On note que dans certaines méthodes de sutfuration/présulfuration, la présence d'hydrogène n'est pas nécessaire, tout au moins en début de présulfuration. Ainsi le brevet européen de la demanderesse EP-B-130850 concerne un procédé permettant d'incorporer ex-situ en l'absence d'hydrogène dans la porosité du catalyseur neuf ou régénéré au moins un agent de sulfuration au taux requis, stoechiométrique ou non stoechiométrique. Ensuite le catalyseur est soumis au moment de son démarrage, sur le site ("in situ") à la réaction d'activation en présence d'hydrogène, qui permet la formation des sulfures actifs pour la réaction.

D'autres types de catalyseurs ou adsorbants contenant des métaux de transition nécessitent des ajouts de soufre avant utilisation pour leur conférer des propriété optimales soit calanques soit d'adsorption.

Ainsi, dans EP-A-466568 ou WO 2004/098774 A1 se référant à des réactions de reformage catalytique ou d'hydrogénations sélectives des essences, il convient parfois d'atténuer l'activité des catalyseurs. Ainsi on citera le cas des catalyseurs contenant du nickel qui sont très actifs -et même trop- pour l'hydrogénation des aromatiques, à tel point qu'ils peuvent provoquer des emballements thermiques (run away) lors des démarrages de catalyseurs neufs ou régénérés, pouvant même aller jusqu'à l'endommagement du réacteur. Il est nécessaire donc de procéder à des traitements de passivation permettant d'éviter ces emballements. Ceux-ci consistent généralement à empoisonner irréversiblement par du soufre les sites actifs les plus virulents du nickel qui existent sur le catalyseur neuf ou régénéré. Ainsi en ce qui concerne plus particulièrement les catalyseurs d'hydrogénation à base de nickel, on commence donc, dans une première étape, par réduire à l'hydrogène dans le réacteur ("in situ") l'oxyde en métal puis pour parer aux inconvénients indiqués ci-dessus, dans une deuxième étape, on diminue l'activité du catalyseur, in situ, par introduction d'une quantité déterminée de soufre en général de 0,1 à 5 % en poids de soufre par rapport au poids de catalyseur.

Dans l'application du reformage catalytique des essences, les catalyseurs à base de Platine et Rhénium doivent être aussi sélectivement sulfurés pour diminuer l'activité hydrogénolysante (craquante) du rhénium, ce qui est effectué par une sulfuration permettant de fixer environ 0.05 à 0.1 % poids de soufre.

En ce qui concerne les adsorbants, on peut se référer par exemple à US-A-4094777 qui décrit une méthode d'élimination du mercure présent dans les gaz naturels et/ou des liquides par adsorption sur un solide. On sait que certains métaux, notamment l'or, l'argent et le cuivre, forment des amalgames avec le mercure, d'où une possibilité d'extraction du mercure par des adsorbants contenant certains de ces métaux. Ces masses adsorbantes se révèlent très efficaces si les métaux utilisés se trouvent à l'état sulfuré.

On citera pour les techniques d'adsorption le brevet EP-A107582 qui décrit des masses d'adsorption pour l'élimination du mercure présent dans un gaz ou un liquide, ces nouvelles masses comportant un support et du cuivre à l'état de sulfure. De même le brevet US-A-4902662 décrit un adsorbant à base de cuivre qui est sulfuré à l'aide d'un polysulfure organique. Citons encore US-A-5350728 ou US-A-5245106, dans lesquels la masse d'adsorption de mercure renferme également du cuivre (sous forme CuO ou Cu₂O) qui est sulfuré par incorporation de soufre élémentaire.

### Le concept de l'invention

Selon l'invention, deux méthodes essentielles sont appliquées en combinaison
(1) Sulfuration/présulfuration « hors-site » (ex-situ).
(2) Utilisation d'un réacteur de sulfuration/présulfuration de type « élévateur » ou « descendeur », sensiblement vertical, de forme tubulaire, et vibré.

### L'art antérieur concernant le premier point (hors site)

Autrefois, la sulfuration/présulfuration était effectuée in-situ, c'est à dire soit dans la zone réactionnelle de raffinage ou dans la zone d'adsorption, là où le catalyseur ou l'adsorbant est utilisé, soit au voisinage immédiat du réacteur (on écrit arbitrairement "in situ") c'est-à-dire en tête des réacteurs ou dans des zones plus au moins en communication directe avec ces réacteurs, nécessitant d'opérer dans des conditions opératoires (de température, pression ou autres) imposées au moins en partie par les conditions opératoires des réacteurs eux-mêmes ou des annexes de ces réacteurs.

### L'art antérieur concernant le deuxième point

La réaction de sulfuration/présulfuration de particules d'un catalyseur ou d'un adsorbant était également effectuée soit en lit fixe soit dans des zones où les particules solides de catalyseur ou d'adsorbant sont en mouvement, par exemple sous forme d'un lit compact ou sous forme d'un lit mobile ainsi qu'il est expliqué dans WO98/06493, soit encore sous forme d'un lit de particules en rotation dans un four tournant (voir le brevet de la demanderesse FR-B-2649623).

Ces diverses mises en oeuvre sont commentées ci-dessous.

Le document EP- 0612 561 décrit l'appareil comportant une spire telle qu'utilisée dans l'invention, qui est chauffée par effet Joule.

### L'invention

La présente invention concerne donc un procédé de sulfuration ou présulfuration hors site de particules d'un catalyseur ou d'un adsorbant dans un réacteur sensiblement tubulaire et vertical, vibré de type élévateur ou de type descendeur, non chauffé, en présence d'hydrogène sulfuré pur ou dilué dans de l'hydrogène ou de l'azote comme agent de sulfuration/présulfuration. Le procédé selon l'invention est défini dans les revendications 1 à 5.

### L'invention concernant le premier point (hors-site)

Dans l'art antérieur, une telle sulfuration ou présulfuration est effectuée in-situ ou ex-situ (hors site). Actuellement, la régénération des catalyseurs se fait de plus en plus chez un spécialiste de la régénération de catalyseurs, en général loin de l'unité industrielle, donc en hors site. Or, il parait raisonnable de penser à sulfurer aussi en hors site, dans le but de restituer au raffineur un produit prêt à l'emploi. C'est ce qu'a permis le procédé du brevet de la demanderesse EP-B-130850, ou US-A-4530917 (voir aussi EP-B-181254 ou US-A-4719195) dans lequel un composé sulfuré de type polysulfure organique est incorporé dans la masse catalytique. Les catalyseurs sont livrés à la raffinerie ou à toute autre unité, ainsi préconditionnés pour y être activés. Le raffineur, ou tout autre utilisateur, n'a plus qu'à activer ce catalyseur (d'hydrotraitement en particulier) en présence d'hydrogène afin de faire réagir le soufre sur les métaux contenus et démarrer ensuite la réaction de raffinage ou de conservation d'hydrocarbures par injection de la charge à traiter.

Dans EP-B-707890 de la demanderesse, l'agent de sulfuration est du soufre élémentaire ou H₂S ou un des polysulfures organiques cités plus haut avec traitement à l'hydrogène et passivation oxydante, ces deux étapes (traitement à l'hydrogène et passivation pouvant être effectuées ensemble). Dans EP-B-785022 de la demanderesse, la présulfuration ci-dessus est effectuée en lit mobile en présence d'un composé contenant du soufre et de l'hydrogène:

Conformément aux techniques de la demanderesse, on conduit "ex situ" la présulfuration des catalyseurs.

Le premier aspect de l'invention est que la sulfuration/présulfuration du catalyseur ou de l'adsorbant est réalisée en "hors-site", c'est-à-dire en un lieu qui soit distinct du lieu d'utilisation du catalyseur pour sa fonction de conversion ou d'hydroconversion de charges pétrolières. Cette particularité apporte beaucoup d'avantages, notamment parce que le catalyseur chargé dans l'unité contient déjà la quantité de soufre nécessaire, mais aussi qu'il est déjà activé par ailleurs, donc déjà prêt à être utilisé en tant que catalyseur actif. Cette particularité fait gagner un temps précieux à l'utilisateur de l'unité catalytique en raffinerie car simplifie considérablement la procédure de démarrage.

La sulfuration hors site peut avoir aussi un autre type d'avantage décisif. Dans certains cas, elle ne peut être effectuée que de façon hors site, car elle ne serait pas possible à effectuer dans le réacteur qui contient le catalyseur ou l'adsorbant. En effet ces réactions de sulfuration peuvent nécessiter des conditions opératoires, en particulier par exemple de température, qui ne sont pas réalisables dans les réacteurs ou la réaction catalytique ou d'adsorption s'effectue.

Ainsi on peut noter les conditions très particulières signalées dans le brevet US-A-5350728 évoqué plus haut pour l'élimination de mercure. Une masse adsorbante subit une incorporation de cuivre, accessoirement d'argent, puis est calcinée. Ensuite on procède à une sulfuration des métaux (cuivre sous forme CuO ou Cu₂O, argent...) à l'aide de fleur de soufre dilué ou en suspension dans une solution organique, puis à un séchage à 150°C. Ce sont des conditions opératoires qui seraient difficiles à mettre en oeuvre dans un réacteur d'adsorption de mercure.

### L'invention concernant le deuxième point (utilisation d'une zone en vibration)

Un autre aspect de l'invention est que, cette sulfuration intervienne de préférence sur un catalyseur en mouvement dans la zone d'incorporation de soufre. Les réactions d'activation interviennent ainsi alors que le catalyseur est en mouvement et non pas en lit fixe.

Le problème potentiel en effet des lits fixes est l'existence de chemins préférentiels qui a pour conséquence la création de zones où le catalyseur aura vu des quantités de soufre insuffisantes par rapport à la stoechiométrie nécessaire. Un autre problème potentiel des lits fixes est aussi la difficulté relative d'évacuer les calories formées par les réactions exothermiques de sulfuration. Le brassage continu du catalyseur est intéressant à ces deux titres. Ainsi, on opère avec un lit catalytique en mouvement.

Dans l'art antérieur, on peut utiliser par exemple soit un lit de type croulant où le solide descend lentement par gravité le long d'un tube ou d'une couronne, soit un lit fluidisé où le solide est soulevé par un flux de gaz de haut débit, soit un lit mobile, soit encore un lit où le catalyseur circule dans un four à bandes ou dans un four rotatif. Le lit peut éventuellement être expansé ou bouillonnant.

Ces catalyseurs ou adsorbants contiennent des métaux sulfurables comme par exemple ceux des colonnes IVB, VB, VIB, VIIB, VIIIB, IB, IIB de la classification périodique des éléments.

### Description détaillée des réacteurs en mouvement de l'art antérieur dans les procédés de sulfuration/présulfuration

Ainsi, dans la présente invention, le procédé de présulfuration ou de sulfuration est effectué ex-situ (hors site), cet aspect hors site étant pris en combinaison (voir plus bas) avec la technique d'un mouvement ascendant ou descendant des particules d'un catalyseur ou d'un adsorbant.

Dans l'art antérieur, cette sulfuration ou présulfuration, souvent effectuée autrefois en lit fixe s'effectue plutôt maintenant en lits mobiles plus efficaces que l'emploi d'un lit fixe comme indiqué dans WO 98/06493. Ainsi, dans ce brevet WO 98/06493, on utilise une zone de sulfuration/présulfuration de type lit fluide avec un lit expansé soutenu par une grille. Le catalyseur est introduit dans la zone et un gaz de fluidisation est injecté pour provoquer l'expansion du lit de particules d'un catalyseur.

Un autre type de lit mobile est décrit dans le brevet français FR-A-2649623 utilisé également pour une sulfuration/présulfuration de particules catalytiques. Il s'agit ici d'un appareil appelé four rotatif « Louisville ». Le catalyseur est introduit dans ce four par une vis sans fin et mis au contact de tubes de vapeur chauds qui tapissent les parois internes de la virole.

### Description détaillée des zones de sulfuration/présulfuration selon l'invention

La présente invention concerne une sulfuration ou présulfuration de particules pulvérulentes d'un catalyseur ou d'un adsorbant dans un procédé consistant soit à faire monter, soit à faire descendre lesdites particules dans au moins une spire hélicoïdale vibrante métallique, de forme sensiblement tubulaire, à les soumettre sur la majeure partie de leur trajet à un profil de température et à les mettre en contact avec au moins un fluide sur au moins une partie de leur trajet.

La spire peut être de forme sensiblement tubulaire, ou de forme aplatie, comme une auge fermée, ou deux assiettes superposées.

D'autre part, l'exothermicité de la réaction de sulfuration permet de chauffer substantiellement les particules. Aussi, dans la réalisation de l'invention, l'appareil n'est pas chauffé. En revanche, il peut être plus ou moins calorifugé par des matériaux isolants afin de moins disperser la chaleur provoquée par l'avancement de la réaction. La température des particules est une résultante des calories produites, elles mêmes dépendent des débits de solides et de gas réactifs, et des calories échangées vers l'extérieur.

Le brevet français FR-A-2780316 décrit un appareil comportant une spire hélicoïdale vibrante, tel que les échanges de chaleur sont réalisés par contact indirect avec un fluide caloporteur baignant les pas de la spire ou par contact direct avec au moins un gaz circulant à l'intérieur de la spire à concourant ou à contre-courant par rapport au sens de circulation des particules solides. Ici, la présente invention permet également de réaliser, avec ce type d'appareillage, le traitement de particules solides catalytiques et/ou adsorbantes s'élevant au sein d'au moins une spire hélicoïdale vibrante de forme sensiblement tubulaire, lesdites particules étant soumises à un profil de température (soit pour un chauffage soit pour un refroidissement) sur la majeure partie de leur trajet et lesdites particules étant mises en contact avec au moins un fluide sur au moins une partie de leur trajet. Ledit fluide est de préférence un gaz réactif dans le cas de particules solides d'un catalyseur ou d'un adsorbant: Mais il est également possible d'utiliser ce type d'appareillage en y provoquant un mouvement descendant des particules solides de catalyseur ou d'adsorbant. On est alors en présence d'un appareil « descendeur » vibrant.

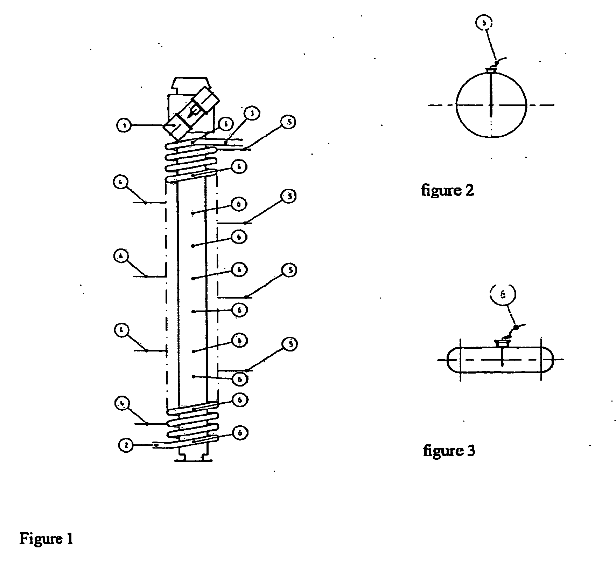

Dans le cas d'un mouvement ascendant, une spire hélicoïdale vibrante à montée ascendante des particules solides d'un catalyseur ou d'un adsorbant est décrite à la figure 1.

La spire est enroulée autour d'un fût, lequel est mis en vibration par exemple par deux moteurs à balourds (1). L'entrée des particules solides s'effectue au bas de la spire par la conduite (2) et leur sortie se fait en haut par la conduite (3). Les entrées de gaz réactionnels se font par les conduites (4) et les sorties par les conduites (5). Des thermocouples disséminés le long du tube permettent un contrôle précis de la température du produit (6).

Le procédé selon l'invention consiste à faire transiter les particules de catalyseur ou d'adsorbant dans au moins un transporteur hélicoïdal vibrant contenant au moins une spire, puis à les soumettre sur au moins une partie de leur trajet et de préférence sur la majeure partie (plus de la moitié) de leur trajet à un profil de température, et à les mettre au contact avec au moins un fluide (gaz comprenant le composé soufré) sur au moins une partie de leur trajet. Le fluide est introduit en au moins un point du transporteur hélicoïdal vibrant et également soutiré en au moins un point. Le nombre de points d'injection et de soutirage peut aussi avantageusement être multiple. On peut par exemple disposer une injection et un soutirage au niveau de chaque spire. La figure 1 montre un exemple intermédiaire avec quatre conduites d'introduction et quatre conduites de soutirage.

Cette disposition permet le contrôle strict de la température qui est une condition importante à la réussite des fabrications. A titre d'illustration, la figure 1 montre que 9 thermocouples sont installés, et les figures 2 et 3 montrent la position de ces thermocouples sur les spires.

Le nombre de thermocouples n'est pas limitatif. La fig.2 est une coupe d'une spire hélicoïdale tubulaire avec thermocouple et la fig.3 une coupe d'une spire hélicoïdale à auge aplatie avec thermocouple.

La température est généralement comprise entre 20 et 1000°C, avantageusement entre 20 et 500°C, de préférence entre 20 et 250°C les conditions de température des procédés de sulfuration de l'art antérieur sont applicables.

Selon l'invention, les particules sont soumises sur leur trajet à un profil de température, en traversant des zones à des températures différentes, de préférence croissants ou décroissants dans le sens du mouvement des particules. L'exemple 2 illustre ce mode de réalisation qui est autorisé par le procédé avec la spire hélicoïdale vibrante.

Il est également avantageux d'aménager une zone finale (dans le sens de l'écoulement des particules) de refroidissement

La vitesse d'avancement des particules est comprise entre 0.05 et 0,5 m/s, de préférence 0.1-0.4 m/s ou encore 0.1-0,3 m/s. Le débit massique horaire de particules est généralement compris entre 1 kg/h et 30 t/h, de préférence 5 kg/h à 10 t/h et encore de préférence entre 10-1000 kg/h.

Le composé soufré est H₂S qui peut être pur ou dilué par H₂ ou N₂.

Le procédé s'appliqué particulièrement bien à la sulfuration des catalyseurs ou adsorbants contenant Co, Mo, Ni et/ou W, ainsi qu'aux catalyseurs ou adsorbants ccntenant Cu, Ag ou Au.

Dans le cas maintenant d'un mouvement descendant, le principe est sensiblement le même que pour un mouvement ascendant. Dans le procédé selon l'invention, le transit des particules de catalyseur dans le transporteur hélicoïdal vibrant peut s'effectuer selon un mode ascendant au descendant. Ainsi, le procédé est mis en oeuvre au moyen d'un transporteur hélicoïdal animé de vibrations dont la résultante des forces appliquée aux particles de catalyseur est calculée afin de permettre soit la montée de ces particules de catalyseur soit leur descente.

Le traitement dudit catalyseur ou adsorbant peut être effectué en contenu ou en discontinu. On peut compléter cette description par les conditions opératoires décrites ci-après, ces indications étant données à titre d'exemples non limitatifs.

Le transporteur hélicoïdal ou éventuellement les transporteur, s'il y en a plusieurs, en série ou en parallèle - comporte au moins une spire et est enroulé autour d'un fût creux dans lequel est disposé un système destiné à produire les vibrations nécessaires à la descente ou à la montée des particules de catalyseur. L'accélération imprimée aux particules en mouvement dans les spires comprend une composante verticale et une composante horizontale. Selon l'orientation de la composante horizontale, les particules vont monter ou descendre, la vitesse de déplacement des particules est corrélée à la composante horizontale de la vibration.

Dans EP 0 612 561 A1, le transporteur hélicoïdal est caractérisé par le chauffage de certains pas de la spire par effet Joule à une température comprise, à titre d'exemple, entre 20 et 1000 °C (les températures utilisées dépendront en fait des conditions nécessaires à le réaction de sulfuration/présulturation). L'effet Joule a pour conséquence directe la génération de chaleur dans la masse de la spire. Il permet ainsi d'obtenir une plus grande souplesse pour la maîtrise de la température au coeur de la spire par rapport au chauffage indirect par fluide caloporteur ou au chauffage direct par un gaz, réactif ou non, circulant dans la spire.

A contrario, dans les processus de sulfuration selon l'invention, il peut être avantageux de conserver une faible température. Or, compte tenu de la forte exothermicité des réactions de sulfuration en général, il peut s'avérer difficile de conserver des températures faibles dans des réacteurs adiabatiques ou du moins bien isolés des échanges extérieurs. Le transporteur hélicoïdal peut dans ce cas particulier être un avantage compte tenu de sa grande surface métallique externe par rapport à son volume lui conférant des propriétés d'échange thermique élevé.

Ceci est particulièrement vrai si le tube a une forme aplatie, ou auge fermée, comme deux assiettes superposées, la forme inférieure plate étant favorable à une grande surface de contact entre particules et paroi, donc à un bon échange thermique.

Une mise en oeuvre particulière du procédé selon l'invention peut comprendre un refroidissement des particules solides en fin de trajet, c'est-à-dire dans l'extrémité supérieure ou inférieure de la spire (selon qu'il s'agit d'un mouvement ascendant ou descendant). Ce refroidissement est effectué par mise en contact indirect de ladite extrémité avec un fluide caloporteur. Ledit fluide peut être de l'eau. La mise en contact des particules solides avec au moins un fluide sur au moins une partie du trajet desdites particules peut se faire successivement plusieurs fois le long du trajet desdites particules.

Ledit fluide circule à concourant ou à contre courant par rapport à la circulation des particules solides.

Le procédé selon une mise en oeuvre particulière de l'invention comprend l'utilisation d'au moins une spire hélicoïdale vibrante constitué d'un tube de forme sensiblement circulaire.

Les figures 2 et 3 illustrent ce type de tube, montré en coupe, en indiquant en plus la position possible du thermocouple. Ladite spire, par exemple métallique, comporte au moins deux pas et peut être obtenue par exemple par la mise en forme d'un tube métallique selon une hélice autour d'un axe sensiblement vertical. Un fût central permet de rigidifier et de soutenir l'hélice formée par la spire.

Le procédé selon une mise en oeuvre particulière de l'invention comprend l'utilisation d'au moins une spire hélicoïdale vibrante constitué d'un tube de forme aplatie, ou auge fermée, comme montré en figure 3.

Le procédé selon une mise en oeuvre particulière de l'invention comprend un transporteur hélicoïdal équipé d'un système comportant la circulation d'un fluide caloporteur. L'ensemble des spires, ou simplement une partie de celles-ci, peut être en contact avec un fluide caloporteur. Ce fluide est destiné à refroidir les particules solides de catalyseur ou d'adsorbant, afin de contrôler la température dans le cas d'une réaction exothermique soumise à des contraintes de température maximum pour obtenir la qualité de produit désiré.

Ce fluide peut être de l'eau ou une solution aqueuse permettant d'atteindre des températures inférieures à 0°C, ou tout autre fluide refroidissant classiquement utilisé.

Les vibrations peuvent être produites par au moins un système placé à tout niveau adéquat, par exemple à la base ou au sommet du fût ou encore positionné autour de la spire. Parmi les systèmes que l'on peut utiliser, se trouvent les systèmes suivants: les moteurs à balourds, les vibrants électromagnétiques (excités par un cycle variable, avec création d'impulsions) et les excitations à balourds. De préférence, les vibrations sont produites par une table servant de support au fût central, la dite table étant actionnée par deux moteurs à balourds.

Toujours à titre d'exemple, les particules solides transformées par le procédé selon l'invention ont une granulométrie comprise entre 10 µm (micromètre) et 10 mm (millimètre), voire comprise entre 100 µm et 5 mm.

Lesdites particules solides de catalyseur ou d'adsorbant sont de préférence des billes, des extrudés ou des pastilles.

L'appareil peut comprendre :
(a) un tube d'au moins une spire comportant au moins deux pas s'enroulant hélicoïdalement autour d'un axe vertical et d'un fût central. Le tube peut être en métal, de préférence en acier. La dite spire a une longueur développée comprise entre 1 et 200 m et la hauteurs de l'hélice formée par ladite spire est généralement comprise entre 0.1 et 20 m. L'angle de montée de la spire qui mesure l'inclinaison de la spire par rapport à l'horizontale est compris entre 1 et 10°, de préférence entre 1 et 5° et de manière encore plus préférée entre 1 et 4°. La section transversale de la spire peut être sensiblement circulaire auquel cas la spire est un tube. Ledit tube a généralement un diamètre (ou une diagonale) compris entre 10 et 300mm, voire 500mm. Dans le cas d'un appareil pour lequel la spire est un tube, le choix du diamètre du dit tube est lié aux différents autres paramètres du système parmi lesquels le débit massique horaire, le temps de séjour dans la spire des particules solides et dans le cas du système de vibrations préféré selon l'invention, la puissance des moteurs à balourds. La section transversale de la spire peut être de forme plutôt circulaire comme montré sur la figure 2, ou plutôt aplatie, comme montré sur la figure 3.
(b) au moins une conduite latérale d'introduction des particules solides s'ouvrant sur l'extrémité inférieure de la spire dans le cas du mouvement ascendant ou sur l'extrémité supérieure de la spire dans le cas d'un mouvement descendant et
(c) au moins une conduite latérale de soutirage desdites particules s'ouvrant sur l'extrémité supérieure de la spire dans le cas d'un mouvement ascendant ou sur l'extrémité inférieure de la spire dans le cas d'un mouvement descendant,
(d) au moins une conduite latérale d'introduction d'au moins un fluide réactif et une conduite latérale de soutirage des produits fluides de réaction, de telle sorte que ledit fluide circule dans au moins un pas de la spire. Le nombre de conduites de ce type est de préférence de 2 à 10, et de manière encore plus préférée de 3 à 5. Le fluide circule à co-courant ou à contre courant par rapport au sens de circulation des particules solides. La vitesse du courant de fluide (fluide introduit ou dégagé) est choisie en fonction du type de particule solide véhiculée. Il faut tenir compte de ce courant car il accélère ou freine les particules selon son sens de circulation surtout pour de petites particules. En particulier, un courant de fluide circulant à contre courant risque de bloquer l'appareil. Par exemple, pour des particules de sable de granulométrie égale à 1,6mm, la vitesse de courant réactif gazeux circulant à contre courant doit être inférieure à 2 m/s pour permettre un bon fonctionnement de l'appareil.
(e) des moyens pour imprimer des vibrations à l'ensemble fût-spire, tels que: la constante adimensionnelle d'accélération, rapport de la composante verticale de l'accélération à l'accélération de la pesanteur, est comprise notamment entre, 0 et 4, de préférence entre 1, 2 et 3,5, et de manière encore plus préférée entre 1 et 3, tels que la vitesse d'avancement des particules est comprise, à titre d'exemple, entre 0,05 et 0,5 m/s, de préférence entre 0,1 et 0,4 m/s et de manière encore plus préférée entre 0,1 et 0,3 m/s et tels que le débit massique horaire de particules est compris, par exemple, entre 1 kg/h et 50 tonnes/h, de préférence entre 5 kg/h et 10 tonnes/h.

Dans le cas de la mise en oeuvre préférée selon l'invention, les vibrations sont produites par une table servant de support au fût central et actionnée par deux moteurs à balourds. Dans ce cas, les particules solides véhiculées à l'intérieur de la spire avancent à une vitesse proportionnelle à la constante adimensionnelle d'accélération, pour une inclinaison de moteurs et un angle de montée donnés. La constante adimensionnelle d'accélération dépend de l'écartement des balourds et de leur vitesse de rotation pour le système donné. Pour une variation de ladite constante comprise entre 1 et 3,5 , de préférence entre 1,2 et 3,5, ou encore entre 1 et 3, la vitesse d'avancement des particules est typiquement comprise entre 0,1 et 0,3 m/s ; Ainsi ladite vitesse est facilement réglable en agissant sur l'écartement des balourds, l'inclinaison des moteurs ou la vitesse de rotation des moteurs. Quant au débit volumique horaire des particules, il dépend de la constante adimensionnelle de vibration, mais aussi du diamètre du tube formant la spire.

De préférence, dans le cas d'un mouvement ascendant, la conduite latérale d'introduction desdites particules solides s'ouvre sur l'extrémité inférieure de la spire et la conduite latérale de soutirage desdites particules s'ouvre sur l'extrémité supérieure de la spire, et dans le cas d'un mouvement descendant, la conduite latérale d'introduction des dites particules solides s'ouvre sur l'extrémité supérieure de la spire et la conduite latérale de soutirage desdites particules s'ouvre sur l'extrémité inférieure de la spire.

### Avantages de la technologie de l'invention par rapport à un four rotatif

- Meilleur contrôle de température sur des réactions exothermiques, possibilité supérieure d'évacuation de calories.
- Très bon contact gaz solide, permettant d'améliorer la diffusion extra et intra granulaire
- Possibilité de sulfurer avec temps de séjour réduit. Contrôle parfait du temps de séjour ; bon écoulement du solide de type piston.
- Meilleur contrôle local (en tout point, pour toute particule solide) du ratio débit de gaz/débit de solide, donc sulfuration plus homogène, plus précise.
- Faible taux d'attrition, de création de particules fines.
- Possibilité de sulfurer dans un équipement minimisant la quantité d'H₂S en phase gaz. Ceci est important car la législation locale impose une quantité maximum de 10 à 50 kg d'H₂S présent sur le site industriel « à un instant t » avant demande spécifique d'autorisation. Le volume réactionnel (ou volume mort) est considérablement plus faible qu'en four rotatif.
- Plus faible danger en cas de rupture d'installation à cause de ce faible volume réactionnel.
- Pas de pièce en mouvement, juste une vibration, d'où pas besoin de joints, d'où des risques de fuites plus limités. Crucial pour les gaz dangereux comme H₂S.
- Encombrement réduit, coût d'installation faible, maintenance légère ; conforme à la tendance actuelle dite «d'intensification de procédé».

### Avantages de la technologie de l'invention par rapport au lit fluidisé

- Meilleur contrôle de température sur ces réactions exothermiques, possibilité supérieure d'évacuation de calories par les parois métalliques, et non uniquement la phase gaz.
- Meilleur contrôle local (en tout point, pour toute particule) du ratio débit de gaz/débit de solide, donc sulfuration plus homogène, plus précise.
- Meilleur contrôle du temps de séjour : écoulement du solide de type piston.
- L'attrition (création de particules fines) est souvent forte dans un lit fluidisé, à cause des chocs des particules entre elles et sur les parois. Elle est faible dans un transporteur vibré.
- Le lit fluide utilise des débits élevés de gaz, en l'occurrence un mélange dangereux contenant de l'H₂S. Dans un lit fluide, les gaz sont à la fois un réactif et un porteur hydraulique qui permet de mettre les particules en mouvement, d'où une exigence de vitesse linéaire forte et donc de forts débits gazeux. Il faut généralement un circuit de gaz avec recyclage, ce qui complique l'installation dans le cas d'un gaz dangereux.
- Le transporteur vibré utilise des quantités de gaz correspondant environ à la stoechiométrie de la réaction. Les débits de gaz sont faibles, ce qui présente un avantage en matière de prix de revient et de sécurité. Les effluents gazeux peuvent être directement traités en sortie d'installation (par incinération par exemple).
- Plus faible danger HSE en cas de rupture d'installation à cause du faible volume de l'installation et des faibles débits de gaz.
- Encombrement réduit, coût d'installation faible ; conforme à la tendance actuelle dite «d'intensification de procédé».

### Exemples

### 1: Sulfuration de particules de catalyseur contenant du cobalt et du molybdène (non conforme à l'invention)

Un catalyseur d'hydrotraitement de coupes pétrolières, composé de 24 % pds d'oxyde de Molybdène MoO₃ et de 4,5 % d'oxyde de cobalt CoO supportés sur une alumine est présulfuré dans les conditions suivantes à l'aide d'un mélange d'hydrogène sulfuré et d'hydrogène.

Le réacteur est un transporteur hélicoïdal vibré et chauffé de caractéristiques suivantes : un tube de diamètre 114 mm enroulé en 27 spires, de longueur totale 127 m. Le débit de catalyseur est réglé à 80 kg/h. Dans ces conditions, le temps de séjour moyen dans le tube vibré est de 35 minutes. Le débit de gaz H₂S est de 20 m3/h, celui d'H₂ de 80 m3/h. Ce mélange est injecté dans 3 zones réparties également le long du tube. Quatre zones indépendantes de chauffage électrique permettent d'obtenir un profil ascendant de température, dont les valeurs moyennes sont : 81, 225, 340, 278°C.

La teneur en soufre du produit final est de 11,6 %, ce qui correspond à un taux de sulfuration de 94% par rapport à la stoechiométrie théorique des sulfures de cobalt Co₉S₈ et de molybdène MoS₂, montrant ainsi que le catalyseur est bien sulfuré, malgré un temps de séjour relativement faible.

### 2. Sulfuration de particules contenant du cuivre

Un produit contenant de l'oxyde de cuivre (teneur en CuO : 13,9 % poids) supporté sur une alumine est soumis à un traitement de sulfuration. La réaction souhaitée est la suivante : CuO + H₂S ⇔ CuS + H₂O.

Elle peut s'effectuer sous un mélange H₂S / N₂. Elle est très exothermique et s'effectue dans le même transporteur hélicoïdal vibré de l'exemple 1, si ce n'est que l'équipement n'est pas chauffé pour cet essai.

Le débit de produit est réglé à 140 kg/h. Dans ces conditions, le temps de séjour moyen dans le tube vibré est de 27 minutes. Le débit de gaz hydrogène sulfuré H₂S est de 7,2 m3/h, celui d'azote de 18 m3/h. Ce mélange est injecté dans 3 zones réparties également le long du tube. Le profil de température moyen est le suivant : 85, 138, 154, 159°C.

Le produit final présente une couleur noire très homogène. Sa teneur en soufre est de 6.0 % poids, soit 105 % de la stoechiométrie théorique correspondant à CuS, ce qui est très satisfaisant Malgré un débit de produit relativement élevé, le produit est d'une part bien sulfuré, et d'autre part sa température est restée suffisamment limitée, ce qui était recherché pour permettre une bonne qualité.

### 3. Sulfuration de particules de catalyseur contenant du cobalt et du molybdène en spire non chauffée

Un catalyseur d'hydrotraitement de coupes pétrolières, composé de 24 % pds d'oxyde de Molybdène MoO₃ et de 4,5 % d'oxyde de cobalt CoO supportés sur une alumine, de perte au feu mesurée à 500°C de 18,5% poids, est présulfuré dans les conditions suivantes à l'aide d'un mélange d'hydrogène sulfuré et d'hydrogène.

Le réacteur est un transporteur hélicoïdal vibré et non chauffé de caractéristiques suivantes : un tube de diamètre 114 mm enroulé en 27 spires, de longueur totale 127 m. Le débit de catalyseur est réglé à 250 kg/h. Dans ces conditions, le temps de séjour moyen dans le tube vibré est de 35 minutes. Le débit de gaz H₂S est de 41 m3/h, celui d'H₂ de 21,6 m3/h. Ce mélange est injecté dans 3 zones réparties également le long du tube. La température moyenne dans les zones les plus chaudes est de 225°C. Cette température est atteinte grâce à l' exothermie de la réaction et le relativement haut débit de catalyseur et de gaz réactif.

La teneur en soufre du produit final est de 9,7 %, ce qui correspond à un taux de sulfuration de 79 % par rapport à la stoechiométrie théorique des sulfures de cobalt Co₉S₈ et de molybdène MoS₂, montrant ainsi que le catalyseur est correctement sulfuré, malgré un temps de séjour relativement faible.

Il est probable que la formation des espèces actives ne soit pas complète à ce niveau de température, sachant qu'il est souvent admis qu'il faille au moins 300°C pour les former.

Néanmoins le procédé conserve tout son avantage, à savoir celui de disposer d'un catalyseur prêt à l'emploi. Sa quantité de soufre correspondant à 79% du niveau théorique de la phase sulfure permet, dans la majorité des applications de l'hydrotraitement, de le démarrer sous charge liquide et hydrogène, et la phase active se complétera d'elle-même dans les premières heures de son utilisation.

### Description des figures:

Figure 1 : Schéma d'un réacteur de type élévateur vibré
Figure 2 : Coupe d'une spire hélicoïdale : tubulaire avec thermocouple
Figure 3 : Coupe d'une spire hélicoïdale à auge aplatie avec thermocouple

## Revendications

1. Procédé d'incorporation de soufre dans la porosité des particules solides d'un catalyseur ou d'un adsorbant, le dit procédé étant effectué hors-site en présence , de sulfure d'hydrogène pur ou dilué dans de l'hydrogène ou dans de l'azote, procédé dans lequel on fait monter ou descendre lesdites particules dans unezone d'incorporation de soufre qui comprend au moins une spire hélicoïdale vibrante, lesdites particules étant soumises à un profil de température, procédé dans lequel la spire est non chauffée, dans lequel la température est comprise entre 20 et 250°C.

2. Procédé selon la revendication 1 dans lequel, en fin de trajet, les particules sont refroidies par un fluide caloporteur

3. Procédé selon l'une des revendications 1 ou 2 dans lequel les particules sont soumises à un profil de températures croissantes ou décroissantes dans les sens du mouvement des particules.

4. Procédé selon l'une des revendications 1 à 3 appliqué à la sulfuration de catalyseurs ou d'adsorbants contenant au moins l'un ou l'autre des métaux cobalt, molybdène, nickel et tungstène.

5. Procédé selon l'une des revendications 1 à 4 appliqué à la sulfuration de catalyseurs ou d'adsorbants contenant au moins du cuivre, de l'argent ou de l'or.

## Claims

1. Process for incorporating sulfur in the porosity of solid particles of a catalyst or an adsorbent, whereby said process is carried out off-site in the presence of hydrogen sulfide that is pure or diluted in hydrogen or in nitrogen, a process in which said particles are made to rise or fall in a sulfur incorporation zone that comprises at least one vibratory helical coil, whereby said particles are subjected to a temperature profile, a process in which the coil is not heated, in which the temperature is between 20 and 500°C, preferably 20 and 250°C..

2. Process according to claim 1, in which, at the end of the path, the particles are cooled by a coolant.

3. Process according to one of claims 1 or 2, in which the particles are subjected to an increasing or decreasing temperature profile in the directions of movement of the particles.

4. Process according to one of claims 1 to 3 that is applied to the sulfurization of catalysts or adsorbents that contain at least one or the other of the metals cobalt, molybdenum, nickel and tungsten.

5. Process according to one of claims 1 to 4 that is applied to the sulfurization of catalysts or adsorbents that contain at least copper, silver or gold.

## Patentansprüche

1. Verfahren zum Einarbeiten von Schwefel in die Poren der Feststoffpartikel eines Katalysators oder eines Adsorptionsmittels, wobei das Verfahren außerhalb des Einsatzortes in Gegenwart von Schwefelwasserstoff durchgeführt wird, welcher rein oder in Wasserstoff oder Stickstoff verdünnt ist, wobei die Partikel im Rahmen des Verfahrens aufwärts oder abwärts in einen Schwefeleinarbeitungsbereich befördert werden, der mindestens eine schwingende Spiralwindung umfasst, wobei die Partikel einem Temperaturprofil ausgesetzt werden, wobei im Rahmen des Verfahrens die Windung nicht beheizt ist und die Temperatur im Bereich von 20 bis 250 °C liegt.

2. Verfahren nach Anspruch 1, wobei die Partikel am Ende der Durchlaufstrecke mittels eines Wärmeträgerfluids abgekühlt werden.

3. Verfahren nach einem der Ansprüche 1 oder 2, wobei die Partikel einem Profil von Temperaturen ausgesetzt werden, die mit fortschreitender Bewegung der Partikel ansteigen oder absinken.

4. Verfahren nach einem der Ansprüche 1 bis 3, das zur Sulfurierung von Katalysatoren oder Adsorptionsmitteln angewendet wird, welche mindestens ein beliebiges der Metalle Kobalt, Molybdän, Nickel und Wolfram enthalten.

5. Verfahren nach einem der Ansprüche 1 bis 4, das zur Sulfurierung von Katalysatoren oder Adsorptionsmitteln angewendet wird, welche mindestens Kupfer, Silber oder Gold enthalten.
